# EUROPEAN PATENT SPECIFICATION

(11) **EP 1 154 591 B1**
(45) Date of publication and mention of the grant of the patent: **24.09.2003**
(21) Application number: 01303494.7
(22) Date of filing: 17.04.2001
(51) Int. Cl.: H04B 10/10

(54) **Method and apparatus for communication signal autotracking in a free space optical transmission system**
Verfahren und Vorrichtung zur Übertragungssignalnachführung in einem optischen Freiraumübertragungssystem
Procédé et dispositif de poursuite automatique de signal de communication dans un système de transmission optique en espace libre

(30) Priority: 10.05.2000 US 680812
(43) Date of publication of application: 14.11.2001
(73) Proprietor: LUCENT TECHNOLOGIES INC., Murray Hill, New Jersey 07974-0636 (US)
(72) Inventor: Ahrens, Robert G., Chatam, New Jersey 07928 (US); Presby, Herman Melvin, Highland Park, New Jersey 08904 (US); Tyson, John A., Pottersville, New Jersey 07979 (US)
(74) Representative: Watts, Christopher Malcolm Kelway, Dr.

(56) References cited:
- EP-A- 0 398 596
- EP-A- 0 876 019
- US-A- 3 497 697
- US-A- 5 347 387

## Description

### Field of the Invention

The present invention is related generally to data communication systems and, in particular, to free-space optical data communication networks.

### Background of the Invention

Traditional telecommunication systems that connect two or more sites with physical wire or cable are generally limited to relatively low-speed, low-capacity applications. In order to address these limitations, recently developed systems utilize optical fibers. Yet, fibers still require a physical cable connection. To remove this limitation, systems utilizing the free-space transmission of one or more light beams modulated with data have been developed. Systems using such beams greatly improve data speed and capacity rates, up to 10 Gigabytes per second, over traditional wire-based systems and, at the same time, avoid the traditional communication system infrastructure cost of laying cable to physically connect one site in the system to another. Instead of cables, free-space optical communications systems consist, in part, of at least one transmit telescope and at least one receive telescope for sending and receiving information, respectfully, between two or more communications sites. Each of these telescopes contains optics, consisting of at least a primary and a secondary mirror or lenses. The transmit telescope uses its optics to transmit the light beam to the receive telescope. The receive telescope uses its optics to focus the incoming light beam onto the focal plane of the telescope. Generally, each telescope is attached to a communications network or other source/destination of information. In operation, the transmit telescope receives information from its respective network via cable or wireless transmission, and then transmits a light beam modulated with this information to one or more destination receive telescopes. Each receive telescope then relays data to its intended destination in its respective network via a cable or wireless transmission.

The aforementioned free-space communications systems would, therefore, appear to have the benefits of reducing costs associated with maintaining physical hard-wired portions of networks while, at the same time, increasing transmission capacity. However, free-space optical communications may be hampered by a variety of factors. For example, cells of varying temperatures that rise from the ground may result in turbulent volumes of atmosphere with different refraction index. For smaller turbulent disturbances, when the light beam passes through these areas, a portion of the light beam refracts so as to cause distortion in the transmitted light beam. If the turbulent volume is of sufficient size, the entire beam can be refracted such that it is no longer incident up on the optical fiber at the focal plane of the receive telescope, thereby resulting in a condition known as beam wander which may interrupt communications. Additionally, attenuation of the light beam may result from the presence of, for example, fog or snow in the atmosphere between the transmit and receive telescopes. Alternatively, communications interruptions can occur if the transmit and/or receive telescope moves during communications due to a variety of factors, such as wind, thermal effects, vibration of the telescope mounts, or any inadvertent movement of either or both of the telescopes, which cause the maximum amplitude of the transmitted beam to not be incident upon the optical fiber at the focal plane of the receive telescope, leading to a loss of . communications connectivity.

EP-A-0 398 596 discloses an atmospheric communication link comprising two transceivers, one at each end of a break in optical fiber. The light is expanded and collimated by a transmit portion of a transceiver for atmospheric transmission to a receive portion of a transceiver. At the receiver, the received beam is optically focused onto an end of an optical fiber for coupling light into that fiber. The optics in the transceivers are mounted on a platform that is adjustable in real time to optimize the received signal. Optical alignment can be automatically maintained by steering the transmitter. The transmitters and receivers require no communication other than the incoming beam to maintain optical alignment and does not require additional bits in the data stream for telemetry.

US-A-3 497 697 discloses a free space optical communications system wherein the interference generated between a local oscillator signal and an incoming communication signal is used to determine whether the receive transceiver is aligned with the transmitted beam. When the incoming signal and that of the local oscillator are perfectly aligned, the output of a photodetector upon which the signals are each incident is maximized. The output of the photodetector is used to direct control drives for a steering unit so as to bring the receiver system into alignment with the incoming signal. The receiver system is aligned with the incoming laser beam when the A-C component of the photo detector no longer fluctuates and is maximized.

US-A-5 347 387 discloses a self aligning local transceiver wherein a remote beacon separate from the optics of a remote transceiver is used to provide a signal to align the local transceiver with the remote transceiver. Once aligned, the optics of the remote transceiver transmit a communication signal to the local transceiver.

### Summary of the Invention

The aforementioned problems associated with the loss of communications due to attenuation or turbulence-induced beam wander or movement of the telescopes are essentially eliminated with the present invention. In accordance with this invention, in response to a measured decrease in received signal amplitude, the signal amplitude incident upon the receive optical fiber at the receive telescope is varied by dithering either the transmitted light beam, the receive optical fiber, or both. Alignment of the transmitted light beam and the receive telescope is achieved by using the measurement, at the receive telescope, of a signal parameter associated with the amplitude of the received light beam, such as received signal power, to control the variation of the movement of either the transmitted light beam or the receive optical fiber to effect coincidence of the maximum amplitude of said beam and the receive optical fiber at the receive focal plane.

In accordance with one embodiment of this invention the optical fiber located at the focal plane of the transmit telescope is dithered in a variable pattern, such as a circle of variable radius. The effect of such dithering is to oscillate the transmitted light beam in a pattern that corresponds to that dithering pattern which, in turn, oscillates the received signal amplitude of the image on the focal plane of the receive telescope. A signal parameter, such as the received signal power at the optical fiber at the focal plane of the receive telescope, is then measured as the beam oscillates. By comparing the phase of the known oscillating movement of the optical fiber with the phase of the measured power of the received signal, a phase shift is determined. The power measurement and the phase shift determination are then used to determine both the direction and magnitude of movement of the transmit optical fiber necessary to maximize the received signal amplitude at the receive optical fiber. As the received signal amplitude of the image on the focal plane of the receive telescope increases, the radius of the dithering of the transmitted optical fiber is reduced. Maximum signal amplitude is attained by iteratively measuring received signal power, moving the transmit optical fiber to achieve a greater received signal power, and reducing the radius of the dithering pattern. The result is a search function, where the maximum received signal amplitude is sought and then maintained by making progressively finer adjustments to the transmit optical fiber's position and dithering pattern radius.

In a second embodiment of the present invention, rather than dithering the transmit optical fiber, the position of the receive optical fiber at or near the receive telescope's focal plane is dithered in a variable pattern to locate the point of maximum signal amplitude. By using the phase shift measuring technique described above, the receive optical fiber can be moved progressively closer to the point on the focal plane at which the light beam is focused and thus the point of maximum received amplitude of the received light beam. As in the above embodiment, as this movement occurs, the radius of the circular dithering pattern is decreased to allow progressively finer adjustments to the receive fiber's position.

In cases where atmospheric disturbances alter the path of the transmitted beam, or where disturbances occur at both the transmit and receive telescopes, dithering of both the transmitted beam and receive optical fiber may be necessary to achieve coincidence of the maximum transmitted signal amplitude and the receive optical fiber.

The embodiments of the present invention are facilitated by using a mirror design that enlarges the area of the focal plane of the telescopes. Specifically, these embodiments utilize a design whereby the shape of the primary and secondary mirrors is characterized by a variable conic constant to maximize the area of the focal plane of the telescopes. The use of such mirrors in free-space laser communications systems is the subject of a copending application, filed simultaneously herewith, entitled "Telescope for Free Space Optical Communication System," Serial No. 09/679,159.

### Brief Description of the Drawings

FIG. 1 shows a free space optical communications system using a prior art telescope apparatus during normal communications conditions;
FIG. 2 shows a free space optical communication system using a prior art transmit telescope apparatus wherein a disturbance, such as inadvertent movement of the telescope, results in a deviation of the transmitted beam from its intended path and, thus, a reduced received signal amplitude;
FIG. 3 shows a free space optical communication system using a prior art receive telescope apparatus wherein a disturbance, such as inadvertent movement of the telescope, results in a reduced received signal amplitude;
FIG. 4 shows a free space optical communications system using a prior art telescope apparatus wherein interference due to turbulence, attenuation or relative angular misalignment between the transmit and receive telescopes causes the loss of communications;
FIG. 5 shows the communications system of the present invention whereby the transmitted light beam is dithered in a variable pattern;
FIG. 6 represents a view of the orthogonal plane, denoted A - A' in FIG. 5, and further shows a representative pattern within that plane used to dither the transmit fiber, and hence the transmitted light beam, to achieve maximum signal amplitude incident upon the receive telescope;
FIG. 7 shows a representative pattern used to dither the receive fiber within or near the focal plane of the receive telescope to achieve maximum signal amplitude of the received signal;
FIG. 8 shows a graphical representation of the oscillation of the transmitted beam or the receive optical fiber and corresponding measured received signal power as a function of time that enables the determination of phase shift; and
FIG. 9 shows a flow chart describing the steps of the present invention.

### Detailed Description

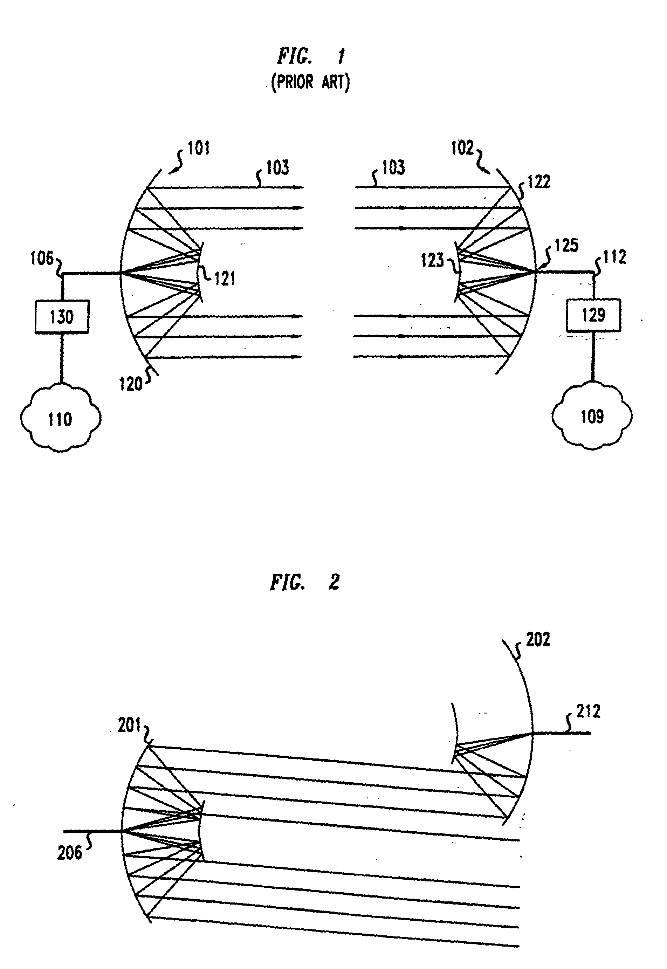

FIG. 1 shows a diagram of two prior art optical communication telescopes, 101 and 102, during normal operating conditions in a free-space optical communications system. Laser 130 produces an optical light beam that is modulated with data received from network 110. The transmit telescope 101 receives the modulated optical signal via optical fiber 106. Primary mirror 120 and secondary mirror 121 optically shape the modulated light beam such that, when the transmit telescope 101 and receive telescope 102 are properly aligned, the beam is incident upon the focal plane of receive telescope. Receive telescope 102 utilizes its optics, consisting of a primary mirror 122 and a secondary mirror 123, to focus the incoming modulated light beam 103 onto the receive optical fiber 112 at the focal plane of the receive telescope 102. The receive optical fiber 112 then transmits the modulated optical signal to receiver 129 that demodulates the data from the beam and forwards the data in electrical format to networking equipment within network 109 that disseminates the data within that network.

In certain situations, however, the maximum amplitude of light beam 103 transmitted by transmitting telescope 101 may not be fully incident upon the optical fiber at the focal plane of the receive telescope 102. For example, FIG. 2 shows the case where a disturbance at the transmit telescope results in a deviation of the transmitted light beam from its intended path. In this case, when the transmit optical fiber transmits an optical signal to transmit telescope 201, the optics of the telescope form beam 203 such that it is only partially incident upon receive telescope 202. While the received light beam image remains incident on receive optical fiber 212, less light energy is incident upon that fiber. As a result, the amplitude of the image received by the receive optical fiber 212 will be reduced.

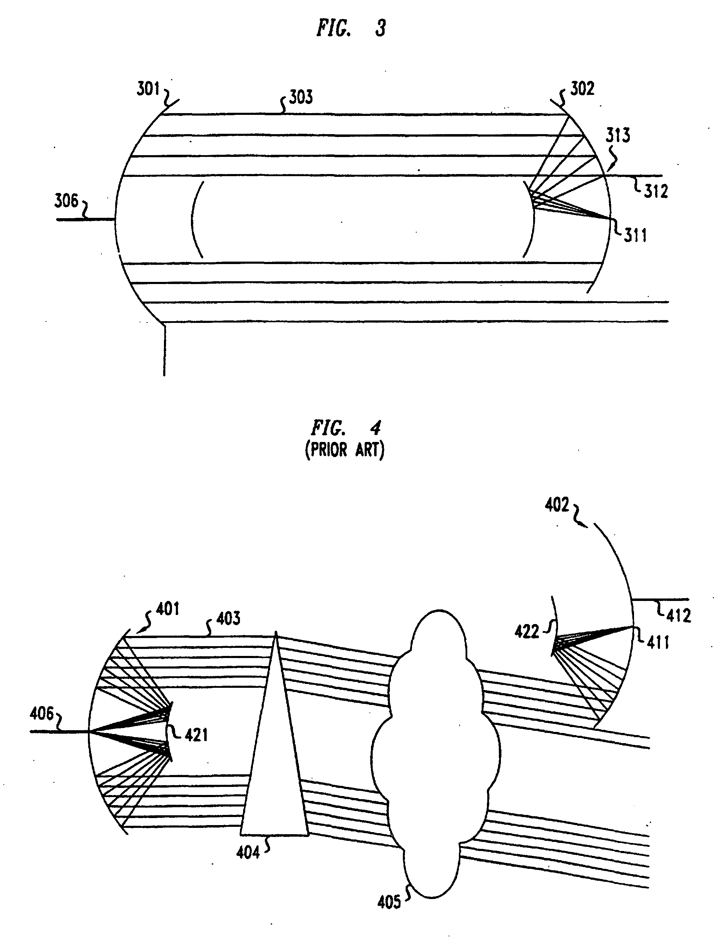

In another case, shown in FIG. 3, a disturbance occurs at the receive telescope. In this case, while the maximum amplitude of the transmitted beam 303 is still fully incident upon receive telescope 302, the image on the receive focal plane 313 will move relative to the receive optical fiber 312 to point 311, for example. The result is that the amplitude of the signal, as received by the receive optical fiber 312, is reduced.

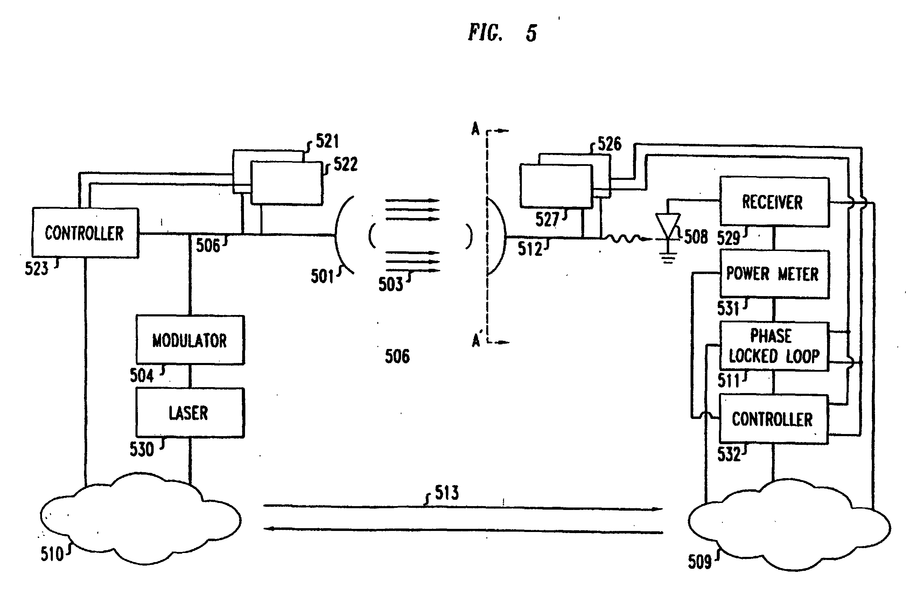

FIG. 4 shows a third case of disturbance that occurs when turbulent cells of varying temperature in the atmosphere and attenuation exist between the transmit and receive telescopes, 401 and 402, respectively. When the transmitted beam 403 passes through turbulence 404 and/or attenuation 405, the beam may deviate from its intended path, and the amplitude of the signal image on the focal plane of the receive telescope may be decreased. If enough turbulence or attenuation is present in the path between the transmit and receive telescopes, the deviation or reduction in amplitude may be of such magnitude as to cause the transmitted light beam to not be incident upon the optical fiber 412 at the focal plane of the receive telescope 402.

FIG. 5 shows a free-space communications system in accordance with the present invention where the transmit and receive optical fibers are capable of being dithered to achieve maximum received signal power. In this embodiment, once again, laser 530 produces a light beam that is modulated by modulator 504 with data from network 510. The light beam is then transmitted via optical fiber 506 to transmit telescope 501 which transmits the beam via free space to receive telescope 502. The light beam is focused into optical fiber 512 at the focal plane of receive telescope 502. Photo detector 508 converts the optical signal to an electrical signal that is sent to receiver 529 for demodulation of the data from the light beam. The signal power of the electrical signal is then measured by power meter 531. If atmospheric disturbance or disturbance at either of the telescopes causes the maximum amplitude of light beam 503 to not be incident upon receive optical fiber 512, the signal power of the optical signal at optical fiber 512 drops, resulting in a detectable power drop by power meter 531.

In a first embodiment of the present invention; when a disturbance occurs at the transmit telescope, the transmit optical fiber 503 is dithered to reacquire maximum received power. To initiate dithering, controller 532 at the receive telescope sends a signal to controller 523 at the transmit telescope. Controller 523 then generates signals that control motorized stages 521 and 522 to move transmit optical fiber 506, and hence light beam 503, in a circular dithering pattern. As a result, the amplitude of the image of the received beam on the focal plane of the receive telescope 502 varies in accordance with the transmitted beam's movement.

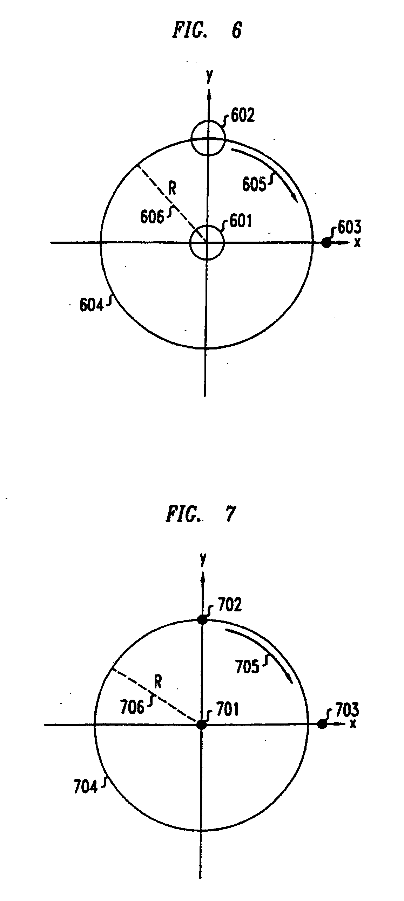

FIG. 6 represents the plane, noted as A - A' in FIG. 5, orthogonal to the longitudinal axis of the receive telescope where the primary mirror of that telescope is located. FIG. 6 further shows the movement of the cross-section of the transmitted light beam in that plane that results from dithering the transmit optical fiber, 506 in FIG. 5. When a disturbance at the transmit telescope has altered the path of the transmitted beam, prior to any dithering, the transmitted beam and, hence, the maximum transmitted signal amplitude is incident upon area 601. Point 603 represents the location of the receive telescope. Since the maximum signal amplitude of the transmitted light beam, located at point 601, is not incident upon the receive telescope 603, the power meter, 531 in FIG. 5, detects a power drop below a specified threshold. As a result, as described above, the transmit optical fiber, 506 in FIG. 5, is dithered in a circular pattern which results in a corresponding circular pattern 604 of the transmitted beam having origin 601 and radius R, noted as 606. To initiate this pattern, the transmit fiber is moved so the transmitted beam is moved along radius 606 to point 602 on the circumference of circular pattern 604 and begins to transit circular dithering pattern 604 in direction 605 about the circle's origin 601.

With reference again to FIG. 5, while transmit optical fiber 506 is dithered, received signal power measurements are taken by the power meter 531 and transmitted to a phased locked loop (PLL) 511. Phase locked loops are well known in the art. PLL 511 receives signals indicative of the dithering oscillation pattern from the controller 523 at the transmit telescope. PLL 511 then isolates the vertical and horizontal components of the dithering oscillation of the transmit optical fiber 506.

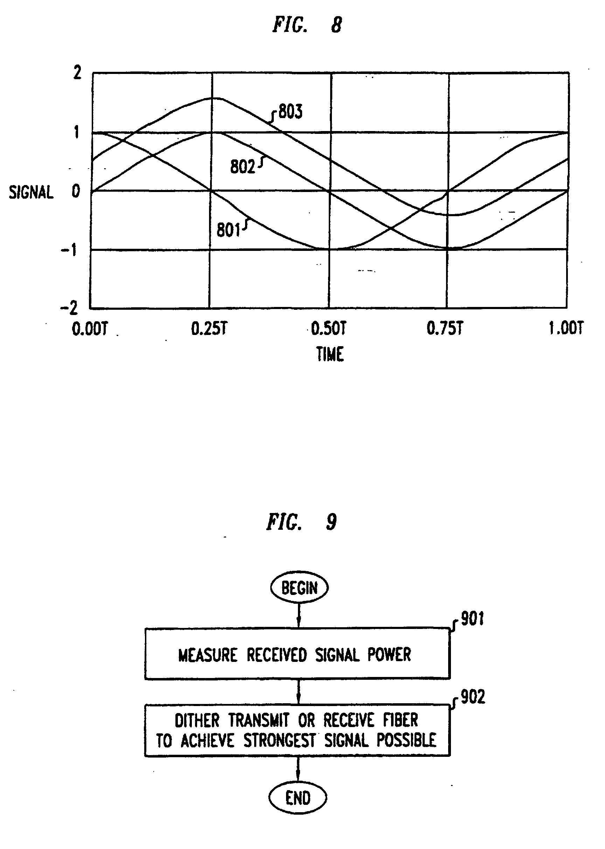

FIG. 8 shows a graphical representation of the vertical and horizontal components, 801 and 802 respectively, of the movement of the transmitted beam as the beam completes one cycle of the dithering pattern, 604 in FIG. 6. The variable T along the horizontal axis is defined as the time the dithering pattern takes to complete on cycle. Component 803 in FIG. 8 also shows power measured by the power meter, 531 in FIG. 5, at the receive telescope corresponding to dithering pattern 604 in FIG. 6. As the transmitted beam is moved through the dithering pattern 604, PLL 511 compares the phase deviations between the vertical and horizontal components of movement, 801 and 802 in FIG. 8, to the measured signal power 803 at the receive telescope. PLL 511 then outputs horizontal and vertical phase error values corresponding to these deviations. These error values and the measured power indicate the angular direction and magnitude of movement of the origin 601 of the circular dithering pattern 604 necessary to achieve incidence of the maximum amplitude of the transmitted beam 602 upon the receive optical fiber 512 within the focal plane of the receive telescope 603. As the origin 601 of dithering pattern 604 and, correspondingly, the maximum amplitude of the transmitted beam, is moved closer to the receive telescope 603, finer movements are facilitated by reducing the radius 606 of the dithering pattern. Thus, maximum receive power can be obtained by iteratively measuring received signal power, adjusting the location of the origin of the transmitted beam's dithering pattern, and reducing the radius of the dithering pattern to obtain increasingly finer adjustments.

One skilled in the art will recognize that dithering the transmitted beam will only fully correct for disturbances that originate at the transmit telescope. For example, if the transmit telescope is inadvertently moved, the transmitted beam may not be fully incident upon the receive telescope, resulting in a reduced received amplitude. In such a case, the transmit optical fiber may be dithered, as described above, to move the transmitted path of the light beam so that it is once again fully incident upon the receive telescope and, correspondingly, the maximum transmitted signal amplitude is incident upon the receive optical fiber at the focal plane of that telescope. If a disturbance occurs at the receive telescope, however, simply maximizing the signal amplitude that is incident upon the receive telescope will not necessarily result in the coincidence of the maximum transmitted signal amplitude and the receive optical fiber. Instead, corrective action at the receive telescope may be necessary.

Therefore, a second embodiment of the present invention addresses the situation where a disturbance occurs at the receive telescope, resulting in a reduction in the received signal amplitude at the receive optical fiber of the receive telescope. When a disturbance occurs at the receive telescope, such as when that telescope is inadvertently moved, the result is a change in the angle of incidence of the transmitted light beam relative to the receive telescope. Such a change results in a movement of the image of the received beam on the receive focal plane away from the point where the image is fully incident upon the receive optical fiber. This results in a corresponding drop in the amplitude of the received signal incident upon the receive optical fiber. Therefore, rather than dithering the transmit optical fiber, when a disturbance occurs at the receive telescope, the receive optical fiber in the receive telescope is dithered while the location of the image of the received beam on the focal plane of the receive telescope 502 remains constant. FIG. 7 represents the movement of the receive optical fiber 512 located at origin 701 of circle 704 with respect to the fixed point of maximum amplitude 703 on the focal plane of the receive telescope.

When the power meter, 531 in FIG. 5, measures a drop in received signal power that results from this drop in amplitude, controller 532 generates signals that cause motorized stages 526 and 527 to move receive optical fiber 512 in a circular dithering pattern, 704 in FIG. 7. Receive optical fiber 512 moves from the origin 701 of circle 704 along radius 706 to point 702 and initiates the circular dithering pattern in direction 705 about origin 701. PLL 511 compares the phase of the received power to the phase of the vertical and horizontal components of movement of fiber 512. PLL 511 then outputs error values to indicate the magnitude and direction of movement necessary to move the origin of dithering pattern 704 such that the point of maximum received power 703 is incident upon receive optical fiber 512. As the origin of dithering pattern 704 is moved closer to the point of maximum power 703, finer movements are facilitated by reducing the radius 706 of the dithering pattern. In this manner, maximum receive power can be obtained by iteratively measuring received signal power, adjusting the location of the origin of the receive fiber's dithering pattern, and reducing the radius of the dithering pattern to obtain increasingly finer adjustments.

It should be noted that the above embodiments only address the instances where a disturbance occurs locally at either the transmit or the receive telescope. However, as previously discussed, free space optical communications are often affected by atmospheric disturbances between the transmit and receive telescopes. In such cases, it may be necessary to dither both the transmitted beam and the receive optical fiber, either simultaneously or sequentially, in order to attain coincidence of the maximum amplitude of the transmitted light beam and the receive optical fiber. For example, when there is one or more disturbances in the atmosphere along the path of the transmitted beam between the transmit and the receive telescopes, the resulting image on the telescope may be of reduced amplitude, similar to the case where a disturbance occurs at the transmit telescope. Additionally, this same image may be moved by the atmospheric disturbances to a new point on the receive focal plane, similar to the case where a disturbance occurs at the receive telescope. As a result, in such cases of atmospheric disturbance, maximum amplitude can only be achieved by dithering, in the manner described above, both the transmitted beam (to maximize the amplitude of the transmitted beam that is incident upon the receive telescope), and the receive optical fiber (to move the receive optical fiber to the point where the maximum amplitude is incident upon that fiber). Maximum transmitted signal amplitude is thus attained by iteratively measuring signal power, dithering either or both the transmitted and receive optical fibers, and moving either or both fibers to a new position on the focal plane of the respective telescope to maximize receive signal amplitude.

While the above embodiments imply that dithering is only initiated upon a detected drop in signal amplitude, one skilled in the art will recognize that dithering at either or both the transmit and receive telescopes may be constantly maintained during communications operations. In such a case, if a strong communications signal exists between a transmit and a receive telescope, the area encompassed by the dithering pattern is relatively small to maintain the strongest signal possible. As soon as the received signal power declines below a defined threshold, however, the area of the dithering pattern at either telescope may be increased to seek a stronger signal according to the above embodiments. Once a stronger signal is detected, the dithering pattern is once again decreased in area. If communications connectivity is lost entirely (e.g., as a result of turbulence, relative angular misalignment between telescopes, etc.), the dithering pattern diameter can be expanded such that the transmitted beam andlor receive optical fiber are varied relatively widely over a greater area in an attempt to reestablish communications. Once again, if communications are successfully reestablished, then the dithering pattern can then be centered at the point on the focal plane of the relevant telescope that yields the strongest received signal, and the diameter of the dithering pattern can be decreased.

The various aspects of the present invention may be utilized in operational free-space optical communications as shown generally by the steps in FIG 9. During normal communications, at step 901, received signal power is measured. At step 902, dithering is initiated in response to a measured signal power that is below a specified threshold. Once this maximum possible signal power is achieved, dithering is either halted or continued at some minimum level.

The foregoing merely illustrates the principles of the invention. It will thus be appreciated that those skilled in the art will be able to devise various arrangements which, although not explicitly described or shown herein, embody the principles of the invention and are included in the scope of the appended claims. Furthermore, all examples and conditional language recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting aspects and embodiments of the invention, as well as specific examples thereof, are intended to encompass functional equivalents thereof.

Thus, for example, it should be apparent to one skilled in the art that diagrams herein represent conceptual views of optical telescopes and light beams modulated with data for purposes of free-space optical communications. Diagrams of optical components are not necessarily accurate in dimension or in relationship to other components but are, instead, merely representative of possible physical arrangements of such components. Additionally, it will be apparent to one skilled in the art that all optical fibers depicted in the diagrams represent only one method of transmitting data between telescopes and network destinations. Any other communication method for passing data from the telescopes to network destinations is intended as an alternative to the method shown in the diagram, without limitation.

Additionally, in the above described embodiment where the transmit optical fiber is dithered, the controller at the receive telescope communicates the need to dither the transmit optical fiber via hard-wired computer networks. However, it should be obvious to one skilled in the art that this feedback function could be accomplished by many different methods including, without limitation, wireless radio frequency transmitters and receivers or even free-space optical communication. This latter method could be accomplished using a second pair of telescopes, co-located with the transmitting and receiving telescopes. Such telescopes would not be required to communicate with high bandwidth and could, therefore, be less complex and less costly than the primary communications telescopes. Alternatively, the already existing transmitting and receiving telescopes could transmit the feedback signal, in addition to their primary communications function. In this case, the communications system could use a different frequency for the feedback signal to avoid interfering with the primary communications signal. As will be obvious to one skilled in the art, if a second pair of telescopes are co-located with the primary telescopes, or if both primary telescopes are capable of transmitting and receiving, the dithering algorithm that corrects for disturbances at either or both communication sites becomes much more complex.

Additionally, the dithering in the above embodiments of the present invention requires time synchronization between the transmit and the receive telescopes. One skilled in the art will recognize that such synchronization may be achieved by many different methods including, without limitation, the use of stable oscillators at each telescope. Such synchronization allows one or both sites to accurately track the movement of the optical fiber that is being dithered. This is necessary to compare the phase of that dithering motion with the phase of the received signal power measured at the receive telescope, as described in the above embodiments. One skilled in the art will also recognize that some manner of maintaining this synchronization is also necessary. This also may be achieved by many different methods including, without limitation, the use of a burst of information from one telescope to the other indicating an expected phase position of either the oscillating fiber or the measured received power signal at a particular time. If the expected phase position is not accurate, adjustments in the oscillation of the out-of-phase fiber may be required.

Other aspects of this invention are also merely representative in nature. For example, while motorized stages are shown as the mechanisms by which the dithering of the transmit or receive optical fiber is affected, there are many other functional equivalents for accomplishing this dithering, including without limitation, piezeo-electric drivers. Additionally, a power meter coupled with a phase locked loop is utilized in the present invention to measure and compare the phase of the received signal power with the phase of the components of the dithering oscillation motion. However, this comparison is but one method of driving the dithering function. Any measurable signal parameter could be used in conjunction with the dithering motion to produce error values used to move the origin of the dithering pattern. Also, a circular dithering pattern is but one possible pattern that could be used and is not meant to be exclusive of other potential embodiments of the dithering pattern.

Finally, it will also be apparent to one skilled in the art that the different aspects of this invention may be implemented together in one communications system or, alternatively, any aspect of this invention may be implement as a "stand-alone" measure to increase communications availability. Nothing herein is intended to require that all aspects of the present invention be included in any single embodiment.

## Claims

1. A transmit telescope (501) comprising:
means for transmitting a light beam (503) to a remote receive telescope (502); **CHARACTERISED BY**
means (521, 522, 523) operative, in response to a signal indicative of a decrease in signal amplitude at the remote receive telescope, to dither the transmitted light beam so that the angle relative to the transmit telescope at which the light beam is transmitted from said transmit telescope varies in order to vary the signal amplitude incident upon a receive optical fiber (512) located at or near the focal plane of an optical system of the remote receive telescope.

2. The transmit telescope of claim 1 wherein the means for dithering the light beam comprises means for dithering in a pattern a transmit telescope optical fiber (506) which delivers the light beam to the transmit telescope and which terminates at or near the focal plane of an optical system of the transmit telescope.

3. The transmit telescope of claim 2 wherein the pattern is a circle of variable radius.

4. The transmit telescope of claim 2 furthering comprising means (523) for generating a time-varying signal indicative of the phase of the dithering motion of the transmit optical fiber.

5. The transmit telescope of claim 4 further comprising means (523) operative, in response to a time-varying signal indicative of the phase of a received signal power at the remote receive telescope, to compare the phase of the dithering motion of the transmit optical fiber to the phase of the received signal power.

6. The transmit telescope of claim 5 wherein said means for dithering the transmit optical fiber is adapted to move the transmit optical fiber in response to a signal generated from the comparison of the phase of the dithering motion of the transmit optical fiber and the phase of the received signal power.

7. The transmit telescope of claim 1 wherein the means for dithering is adapted to dither the transmitted light beam until a maximum signal amplitude is detected in the receive optical fiber at the remote receive telescope.

8. The transmit telescope of claim 1 wherein the signal indicative of a decrease in signal amplitude at a receive optical fiber is generated in response to at least one measurable signal parameter associated with the transmitted light beam received by the remote receive telescope.

9. The transmit telescope of claim 8 wherein the measurable signal parameter is signal power.

10. A remote receive telescope (502) comprising:
means (508, 529) for receiving a light beam from a transmit telescope;
**CHARACTERISED BY**:
means (531) for generating a signal indicative of a decrease in received signal amplitude that is operative for varying the signal amplitude incident upon a receive optical fiber located at or near the focal plane of an optical system of the remote receive telescope.

11. The remote receive telescope of claim 10 further comprising means (511) for generating signal indicative of a comparison of the phase of the vacation of the signal amplitude of the received beam to the phase of a received signal power.

12. A remote receive telescope (502) comprising:
means (508, 529) for receiving a light beam from a transmit telescope;
**CHARACTERISED BY**:
means (526, 527) for dithering the receive optical fiber located at or near the focal plane of an optical system of the remote receive telescope in order to vary the signal amplitude incident upon said fiber.

13. The remote receive telescope of claim 12 wherein the means for dithering is adapted to dither the receive optical fiber in a pattern.

14. The remote receive telescope of claim 13 wherein the pattern is a circle of variable radius.

15. The remote receive telescope of claim 12 furthering comprising means (532) for generating a time-varying signal indicative of the phase of the dithering motion of the receive optical fiber.

16. The remote receive telescope of claim 15 further comprising means (511) for comparing the phase of the dithering motion of the receive optical fiber to the phase of a received signal power.

17. The remote receive telescope of claim 16 wherein said means for dithering the receive optical fiber is adapted to move the receive optical fiber in response to a signal generated from the comparison of the phase of the dithering motion of the receive optical fiber to the phase of the receive signal power.

18. The remote receive telescope of claim 12 wherein the means for dithering is adapted to dither the receive optical fiber until a maximum signal amplitude is detected in the receive fiber.

19. The remote receive telescope of claim 12 wherein the means for dithering is adapted to dither said receive optical fiber in response to at least one measurable signal parameter associated with a signal incident upon said remote receive telescope optical fiber.

20. The remote receive telescope of claim 19 wherein the measurable signal parameter is signal power.

21. A method in a free space optical communication system comprising a transmit telescope (501) and a remote receive telescope (502), **CHARACTERISED BY**:
dithering a transmitted light beam (503), in response to a signal indicative of a decrease in received signal amplitude at a receive optical fiber located at or near the focal plane of an optical system of the remote receive telescope, so that the angle relative to the transmit telescope at which the light bean is transmitted from said transmit telescope varies in order to vary the signal amplitude incident upon the receive optical fiber.

22. The method of claim 21 wherein dithering the transmitted light beam comprises dithering a transmit telescope optical fiber (506), which delivers the light beam to the transmit telescope and which terminates at or near the focal plane of an optical system of the transmit telescope, in a circular pattern of varying radius.

23. The method of claim 22 furthering comprising generating a time-varying signal indicative of the phase of the dithering motion of the transmit optical fiber.

24. The method of claim 23 further comprising comparing, in response to a time-varying signal indicative of the phase of a received signal power at the remote receive telescope, the phase of the dithering motion of the transmit optical fiber to the phase of the received signal power.

25. The method of claim 24 wherein dithering the transmit optical fiber moves the transmit optical fiber in response to a signal generated from the comparison of the phase of the dithering motion of the transmit optical fiber and the phase of the receive signal power.

26. The method of claim 21 wherein the signal indicative of a decrease in received signal amplitude is generated in response to at least one measurable signal parameter associated with the received light beam.

27. The method of claim 26 wherein the measurable signal parameter is signal power.

28. A method in a free space optical communication system comprising:
dithering a receive optical fiber located at or near the focal plane of an optical system of a remote receive telescope so as to vary the signal amplitude incident upon said fiber.

29. The method of claim 28 where the receive optical fiber is dithered in a pattern.

30. The method of claim 29 wherein the pattern is a circle (604) of variable radius (606).

31. The method of claim 28 furthering comprising generating a time-varying signal indicative of the phase of the dithering motion of the receive optical fiber.

32. The method of claim 31 further comprising comparing the phase of the dithering motion of the receive optical fiber to the phase of a received signal power.

33. The method of claim 32 wherein dithering the receive optical fiber moves the receive optical fiber in response to a signal generated from the comparison of the phase of the dithering motion of the receive optical fiber to the phase of the received signal power.

34. The method of claim 28 wherein the remote receive telescope optical fiber is dithered until a maximum signal amplitude is detected in that fiber.

35. The method of claim 28 wherein the receive optical fiber is dithered in response to at least one measurable signal parameter associated with a signal transmitted in said optical fiber.

36. The method of claim 35 wherein the measurable signal parameter is signal power.

37. A method in a free space optical communication system comprising a transmit telescope (501) and a remote receive telescope (502), **CHARACTERISED BY**:
dithering in a pattern a transmitted light beam (503) transmitted by the transmit telescope and dithering, a receive optical fiber (512) located at or near the focal plane of an optical system of the remote receive telescope, in response to a signal indicative of a decrease in received signal amplitude at the receive optical fiber, so that the signal amplitude incident upon the receive optical fiber varies.

38. The method of claim 37 wherein the pattern (604) is a circle of variable radius (606).

39. The method of claim 37 wherein dithering the receive optical fiber comprises moving said receive optical fiber in a pattern (704).

40. The method of claim 39 wherein the pattern is a circle of variable radius (706).

41. The method of claim 37 wherein the transmit optical fiber is dithered until the maximum amplitude of the transmitted beam is incident upon the remote receive telescope, and the receive optical fiber is dithered until said receive optical fiber is coincident with the point of maximum received power on the focal plane of the remote receive telescope.

## Patentansprüche

1. Sendeteleskop (501), umfassend:
ein Mittel zum Senden eines Lichtstrahls (503) zu einem abgesetzten Empfangsteleskop (502); **gekennzeichnet durch**
ein Mittel (521, 522, 523), das als Reaktion auf ein Signal, das eine Abnahme der Signalamplitude in dem abgesetzten Empfangsteleskop anzeigt, wirkt, um den gesendeten Lichtstrahl so zu dithern, daß sich der Winkel relativ zu dem Sendeteleskop, in dem der Lichtstrahl von dem Sendeteleskop ausgesendet wird, ändert, um die auf einen Empfangslichtwellenleiter (512) an oder in der Nähe der Fokalebene eines optischen Systems des abgesetzten Empfangsteleskops einfallende Signalamplitude zu verändern.

2. Sendeteleskop nach Anspruch 1, wobei das Mittel zum Dithern des Lichtstrahls ein Mittel zum Dithern eines Lichtwellenleiters (506) des Sendeteleskops, der den Lichtstrahl zu dem Sendeteleskop übermittelt und an oder in der Nähe der Fokalebene eines optischen Systems des Sendeteleskops endet, in einem Muster umfaßt.

3. Sendeteleskop nach Anspruch 2, wobei das Muster ein Kreis mit variablem Radius ist.

4. Sendeteleskop nach Anspruch 2, weiterhin mit einem Mittel (523) zum Erzeugen eines zeitveränderlichen Signals, das die Phase der Ditherbewegung des Sendelichtwellenleiters anzeigt.

5. Sendeteleskop nach Anspruch 4, weiterhin mit einem Mittel (523), das als Reaktion auf ein zeitveränderliches Signal, das die Phase einer Empfangssignalleistung in dem abgesetzten Empfangsteleskop anzeigt, wirkt, um die Phase der Ditherbewegung des Sendelichtwellenleiters mit der Phase der Empfangssignalleistung zu vergleichen.

6. Sendeteleskop nach Anspruch 5, wobei das Mittel zum Dithern des Sendelichtwellenleiters so ausgelegt ist, daß es den Sendelichtwellenleiter als Reaktion auf ein Signal bewegt, das durch den Vergleich der Phase der Ditherbewegung des Sendelichtwellenleiters und der Phase der Empfangssignalleistung erzeugt wird.

7. Sendeteleskop nach Anspruch 1, wobei das Mittel zum Dithern so ausgelegt ist, daß es den gesendeten Lichtstrahl solange dithert, bis in dem Empfangslichtwellenleiter in dem abgesetzten Empfangsteleskop eine maximale Signalamplitude erkannt wird.

8. Sendeteleskop nach Anspruch 1, wobei das Signal, das eine Abnahme der Signalamplitude in einem Empfangslichtwellenleiter anzeigt, als Reaktion auf mindestens einen meßbaren Signalparameter erzeugt wird, der dem durch das abgesetzte Empfangsteleskop empfangenen gesendeten Lichtstrahl zugeordnet ist.

9. Sendeteleskop nach Anspruch 8, wobei der meßbare Signalparameter Signalleistung ist.

10. Abgesetztes Empfangsteleskop (502), umfassend:
ein Mittel (508, 529) zum Empfangen eines Lichtstrahls von einem Sendeteleskop; **gekennzeichnet durch**
ein Mittel (531) zum Erzeugen eines Signals, das eine Abnahme der Empfangssignalamplitude anzeigt, das wirkt, um die auf einen Empfangslichtwellenleiter an oder in der Nähe der Fokalebene eines optischen Systems des abgesetzten Empfangsteleskops einfallende Signalamplitude zu verändern.

11. Abgesetztes Empfangsteleskop nach Anspruch 10, weiterhin mit einem Mittel (511) zum Erzeugen eines Signals, das einen Vergleich der Phase der Veränderung der Signalamplitude des empfangenen Strahls mit der Phase einer Empfangssignalleistung anzeigt.

12. Abgesetztes Empfangsteleskop (502), umfassend:
ein Mittel (508, 529) zum Empfangen eines Lichtstrahls von einem Sendeteleskop; **gekennzeichnet durch**
ein Mittel (526, 527) zum Dithern des Empfangslichtwellenleiters, der sich an oder in der Nähe der Fokalebene eines optischen Systems des abgesetzten Empfangsteleskops befindet, um die auf den Lichtwellenleiter einfallende Signalamplitude zu verändern.

13. Abgesetztes Empfangsteleskop nach Anspruch 12, wobei das Mittel zum Dithern so ausgelegt ist, daß es den Empfangslichtwellenleiter in einem Muster dithert.

14. Abgesetztes Empfangsteleskop nach Anspruch 13, wobei das Muster ein Kreis mit variablem Radius ist.

15. Abgesetztes Empfangsteleskop nach Anspruch 12, weiterhin mit einem Mittel (532) zum Erzeugen eines zeitveränderlichen Signals, das die Phase der Ditherbewegung des Empfangslichtwellenleiters anzeigt.

16. Abgesetztes Empfangsteleskop nach Anspruch 15, weiterhin mit einem Mittel (511) zum Vergleichen der Phase der Ditherbewegung des Empfangslichtwellenleiters mit der Phase einer Empfangssignalleistung.

17. Abgesetztes Empfangsteleskop nach Anspruch 16, wobei das Mittel zum Dithern des Empfangslichtwellenleiters so ausgelegt ist, daß es den Empfangslichtwellenleiter als Reaktion auf ein Signal bewegt, das durch den Vergleich der Phase der Ditherbewegung des Empfangslichtwellenleiters mit der Phase der Empfangssignalleistung erzeugt wird.

18. Abgesetztes Empfangsteleskop nach Anspruch 12, wobei das Mittel zum Dithern so ausgelegt ist, daß es den Empfangslichtwellenleiter solange dithert, bis in dem Empfangslichtwellenleiter eine maximale Signalamplitude erkannt wird.

19. Abgesetztes Empfangsteleskop nach Anspruch 12, wobei das Mittel zum Dithern so ausgelegt ist, daß es den Empfangslichtwellenleiter als Reaktion auf mindestens einen meßbaren Signalparameter dithert, der einem auf den Lichtwellenleiter des abgesetzten Empfangsteleskops einfallenden Signal zugeordnet ist.

20. Abgesetztes Empfangsteleskop nach Anspruch 19, wobei der meßbare Signalparameter Signalleistung ist.

21. Verfahren in einem optischen Freiraum-Kommunikationssystem mit einem Sendeteleskop (501) und einem abgesetzten Empfangsteleskop (502), **gekennzeichnet durch** die folgenden Schritte:
Dithern eines gesendeten Lichtstrahls (503) als Reaktion auf ein Signal, das eine Abnahme der Empfangssignalamplitude in einem Empfangslichtwellenleiter, der sich an oder in der Nähe der Fokalebene eines optischen Systems des abgesetzten Empfangsteleskops befindet, anzeigt, so daß sich der Winkel relativ zu dem Sendeteleskop, in dem der Lichtstrahl von dem Sendeteleskop ausgesendet wird, ändert, um die auf den Empfangslichtwellenleiter einfallende Signalamplitude zu verändern.

22. Verfahren nach Anspruch 21, wobei das Dithern des gesendeten Lichtstrahls ein Dithern eines Lichtwellenleiters (506) des Sendeteleskops, der den Lichtstrahl zu dem Sendeteleskop übermittelt und an oder in der Nähe der Fokalebene eines optischen Systems des Sendeteleskops endet, in einem kreisförmigen Muster mit veränderlichem Radius umfaßt.

23. Verfahren nach Anspruch 22, bei dem weiterhin ein zeitveränderliches Signal erzeugt wird, das die Phase der Ditherbewegung des Sendelichtwellenleiters anzeigt.

24. Verfahren nach Anspruch 23, bei dem weiterhin als Reaktion auf ein zeitveränderliches Signal, das die Phase einer Empfangssignalleistung in dem abgesetzten Empfangsteleskop anzeigt, die Phase der Ditherbewegung des Sendelichtwellenleiters mit der Phase der Empfangssignalleistung verglichen wird.

25. Verfahren nach Anspruch 24, wobei das Dithern des Sendelichtwellenleiters den Sendelichtwellenleiter als Reaktion auf ein Signal bewegt, das durch den Vergleich der Phase der Ditherbewegung des Sendelichtwellenleiters und der Phase der Empfangssignalleistung erzeugt wird.

26. Verfahren nach Anspruch 21, wobei das Signal, das eine Abnahme der Empfangssignalamplitude anzeigt, als Reaktion auf mindestens einen meßbaren Signalparameter erzeugt wird, der dem empfangenen Lichtstrahl zugeordnet ist.

27. Verfahren nach Anspruch 26, wobei der meßbare Signalparameter Signalleistung ist.

28. Verfahren in einem optischen Freiraum-Kommunikationssystem, mit den folgenden Schritten:
Dithern eines Empfangslichtwellenleiters an oder in der Nähe der Fokalebene eines optischen Systems eines abgesetzten Empfangsteleskops, um so die auf den Lichtwellenleiter einfallende Signalamplitude zu verändern.

29. Verfahren nach Anspruch 28, wobei der Empfangslichtwellenleiter in einem Muster gedithert wird.

30. Verfahren nach Anspruch 29, wobei das Muster ein Kreis (604) mit variablem Radius (606) ist.

31. Verfahren nach Anspruch 28, bei dem weiterhin ein zeitveränderliches Signal erzeugt wird, das die Phase der Ditherbewegung des Empfangslichtwellenleiters anzeigt.

32. Verfahren nach Anspruch 31, bei dem weiterhin die Phase der Ditherbewegung des Empfangslichtwellenleiters mit der Phase einer Empfangssignalleistung verglichen wird.

33. Verfahren nach Anspruch 32, wobei das Dithern des Empfangslichtwellenleiters den Empfangslichtwellenleiter als Reaktion auf ein Signal bewegt, das durch den Vergleich der Phase der Ditherbewegung des Empfangslichtwellenleiters mit der Phase der Empfangssignalleistung erzeugt wird.

34. Verfahren nach Anspruch 28, wobei der Lichtwellenleiter des abgesetzten Empfangsteleskops solange gedithert wird, bis in diesem Lichtwellenleiter eine maximale Signalamplitude erkannt wird.

35. Verfahren nach Anspruch 28, wobei der Empfangslichtwellenleiter als Reaktion auf mindestens einen meßbaren Signalparameter gedithert wird, der einem in dem Lichtwellenleiter gesendeten Signal zugeordnet ist.

36. Verfahren nach Anspruch 35, wobei der meßbare Signalparameter Signalleistung ist.

37. Verfahren in einem optischen Freiraum-Kommunikationssystem mit einem Sendeteleskop (501) und einem abgesetzten Empfangsteleskop (502), **gekennzeichnet durch** die folgenden Schritte:
Dithern eines **durch** das Sendeteleskop gesendeten Lichtstrahls (503) in einem Muster und Dithern eines Empfangslichtwellenleiters (512), der sich an oder in der Nähe der Fokalebene eines optischen Systems des abgesetzten Empfangsteleskops befindet, als Reaktion auf ein Signal, das eine Abnahme der Empfangssignalamplitude in dem Empfangslichtwellenleiter anzeigt, so daß sich die auf den Empfangslichtwellenleiter einfallende Signalamplitude verändert.

38. Verfahren nach Anspruch 37, wobei das Muster (604) ein Kreis mit variablem Radius (606) ist.

39. Verfahren nach Anspruch 37, wobei das Dithern des Empfangslichtwellenleiters ein Bewegen des Empfangslichtwellenleiters in einem Muster (704) umfaßt.

40. Verfahren nach Anspruch 39, wobei das Muster ein Kreis mit variablem Radius (706) ist.

41. Verfahren nach Anspruch 37, wobei der Sendelichtwellenleiter solange gedithert wird, bis die maximale Amplitude des gesendeten Strahls auf das abgesetzte Empfangsteleskop einfällt, und der Empfangslichtwellenleiter solange gedithert wird, bis der Empfangslichtwellenleiter mit dem Punkt der maximalen Empfangsleistung auf der Fokalebene des abgesetzten Empfangsteleskops koinzident ist.

## Revendications

1. Télescope émetteur (501) comprenant :
un moyen pour émettre un faisceau de lumière (503) vers un télescope récepteur distant (502) ; **CARACTERISE PAR**
un moyen (512, 522, 523) fonctionnant, en réponse à un signal indicatif d'une diminution d'amplitude de signal au niveau du télescope récepteur distant, pour activer le faisceau de lumière émis de telle sorte que l'angle par rapport au télescope émetteur auquel le faisceau de lumière est émis par ledit télescope émetteur varie afin de faire varier l'amplitude de signal frappant une fibre optique réceptrice (512) située au niveau ou près du plan focal d'un système optique du télescope récepteur distant.

2. Télescope émetteur selon la revendication 1, dans lequel le moyen d'activation du faisceau de lumière comprend un moyen pour activer selon une configuration une fibre optique de télescope émetteur (506) qui délivre le faisceau de lumière au télescope émetteur et qui se termine au niveau ou près du plan focal d'un système optique du télescope émetteur.

3. Télescope émetteur selon la revendication 2, dans lequel la configuration est un cercle de rayon variable.

4. Télescope émetteur selon la revendication 2, comprenant en outre un moyen (523) pour générer un signal variant dans le temps indicatif de la phase du mouvement d'activation de la fibre optique émettrice.

5. Télescope émetteur selon la revendication 4, comprenant en outre un moyen (523) fonctionnant, en réponse à un signal variant dans le temps indicatif de la phase d'une puissance de signal reçue au niveau du télescope récepteur distant, pour comparer la phase du mouvement d'activation de la fibre optique émettrice à la phase de la puissance de signal reçue.

6. Télescope émetteur selon la revendication 5, dans lequel ledit moyen d'activation de la fibre optique émettrice est adapté pour déplacer la fibre optique émettrice en réponse à un signal généré à partir de la comparaison de la phase du mouvement d'activation de la fibre optique émettrice et de la phase de la puissance de signal reçue.

7. Télescope émetteur selon la revendication 1, dans lequel le moyen d'activation est adapté pour activer le faisceau de lumière émis jusqu'à ce qu'une amplitude de signal maximum soit détectée dans la fibre optique réceptrice au niveau du télescope récepteur distant.

8. Télescope émetteur selon la revendication 1, dans lequel le signal indicatif d'une diminution de l'amplitude de signal au niveau d'une fibre optique réceptrice est généré en réponse à au moins un paramètre de signal mesurable associé au faisceau de lumière émis reçu par le télescope récepteur distant.

9. Télescope émetteur selon la revendication 8, dans lequel le paramètre de signal mesurable est une puissance de signal.

10. Télescope récepteur distant (502) comprenant :
un moyen (508, 529) pour recevoir un faisceau de lumière depuis un télescope émetteur ;
**CARACTERISE PAR** :
un moyen (531) pour générer un signal indicatif d'une diminution d'une amplitude de signal reçue qui fonctionne pour faire varier l'amplitude de signal frappant une fibre optique réceptrice située au niveau ou près du plan focal d'un système optique du télescope récepteur distant.

11. Télescope récepteur distant selon la revendication 10, comprenant en outre un moyen (511) pour générer un signal indicatif d'une comparaison de la phase de la variation de l'amplitude de signal du faisceau reçu à la phase d'une puissance de signal reçue.

12. Télescope récepteur distant (502) comprenant :
un moyen (508, 529) pour recevoir un faisceau de lumière depuis un télescope émetteur ;
**CARACTERISE PAR** :
un moyen (526, 527) pour activer la fibre optique réceptrice située au niveau ou près du plan focal d'un système optique du télescope récepteur distant afin de faire varier l'amplitude de signal frappant ladite fibre.

13. Télescope récepteur distant selon la revendication 12, dans lequel le moyen d'activation est adapté pour activer la fibre optique réceptrice selon une configuration.

14. Télescope récepteur distant selon la revendication 13, dans lequel la configuration est un cercle de rayon variable.

15. Télescope récepteur distant selon la revendication 12, comprenant en outre un moyen (532) pour générer un signal variant dans le temps indicatif de la phase du mouvement d'activation de la fibre optique réceptrice.

16. Télescope récepteur distant selon la revendication 15, comprenant en outre un moyen (511) pour comparer la phase du mouvement d'activation de la fibre optique réceptrice à la phase de la puissance de signal reçue.

17. Télescope récepteur distant selon la revendication 16, dans lequel ledit moyen d'activation de la fibre optique réceptrice est adapté pour déplacer la fibre optique réceptrice en réponse à un signal généré à partir de la comparaison de la phase du mouvement d'activation de la fibre optique réceptrice à la phase de la puissance de signal reçue.

18. Télescope récepteur distant selon la revendication 12, dans lequel le moyen d'activation est adapté pour activer la fibre optique réceptrice jusqu'à ce qu'une amplitude de signal maximum soit détectée dans la fibre réceptrice.

19. Télescope récepteur distant selon la revendication 12, dans lequel le moyen d'activation est adapté pour activer ladite fibre optique réceptrice en réponse à au moins un paramètre de signal mesurable associé à un signal frappant ladite fibre optique de télescope récepteur distant.

20. Télescope récepteur distant selon la revendication 19, dans lequel le paramètre de signal mesurable est une puissance de signal.

21. Procédé dans un système de communication optique dans l'espace libre comprenant un télescope émetteur (501) et un télescope récepteur distant (502),
**CARACTERISE PAR** :
l'activation d'un faisceau de lumière émis (503), en réponse à un signal indicatif d'une diminution d'une amplitude de signal reçue au niveau d'une fibre optique réceptrice située au niveau ou près du plan focal d'un système optique du télescope récepteur distant, de telle sorte que l'angle par rapport au télescope émetteur auquel le faisceau de lumière est émis par ledit télescope émetteur varie afin de faire varier l'amplitude de signal frappant la fibre optique réceptrice.

22. Procédé selon la revendication 21, dans lequel l'activation du faisceau de lumière émis comprend l'activation d'une fibre optique de télescope émetteur (506), laquelle délivre le faisceau de lumière au télescope émetteur et laquelle se termine au niveau ou près du plan focal d'un système optique du télescope émetteur, selon une configuration circulaire de rayon variable.

23. Procédé selon la revendication 22, comprenant en outre la génération d'un signal variant dans le temps indicatif de la phase du mouvement d'activation de la fibre optique émettrice.

24. Procédé selon la revendication 23, comprenant en outre la comparaison, en réponse à un signal variant dans le temps indicatif de la phase d'une puissance de signal reçue au niveau du télescope récepteur distant, de la phase du mouvement d'activation de la fibre optique émettrice à la phase de la puissance de signal reçue.

25. Procédé selon la revendication 24, dans lequel l'activation de la fibre optique émettrice déplace la fibre optique émettrice en réponse à un signal généré à partir de la comparaison de la phase du mouvement d'activation de la fibre optique émettrice et de la phase de la puissance de signal reçue.

26. Procédé selon la revendication 21, dans lequel le signal indicatif d'une diminution d'une amplitude de signal reçue est généré en réponse à au moins un paramètre de signal mesurable associé au faisceau de lumière reçu.

27. Procédé selon la revendication 26, dans lequel le paramètre de signal mesurable est une puissance de signal.

28. Procédé dans un système de communication optique dans l'espace libre comprenant :
l'activation d'une fibre optique réceptrice située au niveau ou près du plan focal d'un système otique d'un télescope récepteur distant de manière à faire varier l'amplitude de signal frappant ladite fibre.

29. Procédé selon la revendication 28, dans lequel la fibre optique réceptrice est activée selon une configuration.

30. Procédé selon la revendication 29, dans lequel la configuration est un cercle (604) de rayon variable (606).

31. Procédé selon la revendication 28, comprenant en outre la génération d'un signal variant dans le temps indicatif de la phase du mouvement d'activation de la fibre optique réceptrice.

32. Procédé selon la revendication 31, comprenant en outre la comparaison de la phase du mouvement d'activation de la fibre optique réceptrice à la phase d'une puissance de signal reçue.

33. Procédé selon la revendication 32, dans lequel l'activation de la fibre optique réceptrice déplace la fibre optique réceptrice en réponse à un signal généré à partir de la comparaison de la phase du mouvement d'activation de la fibre optique réceptrice et de la phase de la puissance de signal reçue.

34. Procédé selon la revendication 28, dans lequel la fibre optique de télescope récepteur distant est activée jusqu'à ce qu'une amplitude de signal maximum soit détectée dans cette fibre.

35. Procédé selon la revendication 28, dans lequel la fibre optique réceptrice est activée en réponse à au moins un paramètre de signal mesurable associé à un signal émis dans ladite fibre optique.

36. Procédé selon la revendication 35, dans lequel le paramètre de signal mesurable est une puissance de signal.

37. Procédé dans un système de communication optique dans l'espace libre comprenant un télescope émetteur (501) et un télescope récepteur distant (502),
**CARACTERISE PAR** :
l'activation selon une configuration d'un faisceau de lumière émis (503) émis par le télescope émetteur et l'activation d'une fibre optique réceptrice (512) située au niveau ou près du plan focal d'un système optique du télescope récepteur distant, en réponse à un signal indicatif d'une diminution d'une amplitude de signal reçue au niveau de la fibre optique réceptrice, de telle sorte que l'amplitude de signal frappant la fibre optique réceptrice varie.

38. Procédé selon la revendication 37, dans lequel la configuration (604) est un cercle de rayon variable (606).

39. Procédé selon la revendication 37, dans lequel l'activation de la fibre optique réceptrice comprend le déplacement de ladite fibre optique réceptrice selon une configuration (704).

40. Procédé selon la revendication 39, dans lequel la configuration est un cercle de rayon variable (706).

41. Procédé selon la revendication 37, dans lequel la fibre optique émettrice est activée jusqu'à ce que l'amplitude maximum du faisceau émis frappe le télescope récepteur distant, et la fibre optique réceptrice est activée jusqu'à ce que la fibre optique réceptrice coïncide avec le point de puissance reçue maximum sur le plan focal du télescope récepteur distant.
